# EUROPEAN PATENT APPLICATION

(11) **EP 1 762 713 A2**
(43) Date of publication of application: **14.03.2007**
(21) Application number: 06017149.3
(22) Date of filing: 17.08.2006
(51) Int. Cl.: F02B 39/10, F02B 39/14

(54) **Bearing structure of motor-driven supercharger**

(30) Priority: 09.09.2005 JP 2005261456
(71) Applicant: Ishikawajima-Harima Heavy Industries Co., Ltd., Tokyo 135-8710 (JP)
(72) Inventor: Shibui, Yasuyuki, c/o Ishikawajima Heavy Ind., Tokyo 135-8710 (JP); Kobayashi, Masao, c/o Ishikawajima Heavy Ind., Tokyo 135-8710 (JP); Mizuhashi, Masaru, c/o Ishikawajima Heavy Ind., Tokyo 135-8710 (JP)
(74) Representative: Grünecker, Kinkeldey, Stockmair & Schwanhäusser Anwaltssozietät

(57) **Abstract**

A bearing structure is provided with a turbine side bearing metal (30a) and a compressor side bearing metal (30b) in which an outer peripheral surface is fitted to a bearing hole (16a) of a bearing housing (16) with a gap, and an inner peripheral surface rotatably supports a turbine shaft (12), and a bearing locking member (32) holding the turbine side bearing metal and the compressor side bearing metal so as to be movable in a radial direction of the turbine shaft and inhibit a movement in an axial direction and a rotating direction. The inner peripheral surface and/or the outer peripheral surface of the bearing metal (30b) (or 30b) is structured as a non-complete round bearing.

## Description

### BACKGROUND OF THE INVENTION

### Field of the Invention

The present invention relates to an exhaust turbine supercharger, and more particularly to a bearing structure of a motor-driven supercharger having an electric motor built-in.

### Description of Related Art

To supply an air having a density increased by a compressor to an engine is called supercharging, and a structure providing for a driving work of the compressor on the basis of an exhaust energy is called as an exhaust-gas turbocharger.

The exhaust-gas turbocharger is generally constituted by a compressor and a turbine which are arranged so as to position a bearing unit therebetween. The compressor has a compressor impeller built-in, and the turbine has a turbine impeller built-in, respectively. The compressor impeller and the turbine impeller are coupled to each other by a connecting shaft supported by a bearing unit, and are structured such as to rotationally drive the turbine impeller by an exhaust gas of the engine, transmit the rotating force to the compressor impeller via the connecting shaft, and compress the air by the compressor impeller so as to supercharge to the engine.

In the exhaust turbine supercharger mentioned above, there has been already proposed a structure having an electric motor built-in for improving a response at a time of rotating at a low speed (for example, patent documents 1 to 3). Hereinafter, the exhaust-gas turbocharger having the electric motor built-in mentioned above is simply called as "motor-driven supercharger".

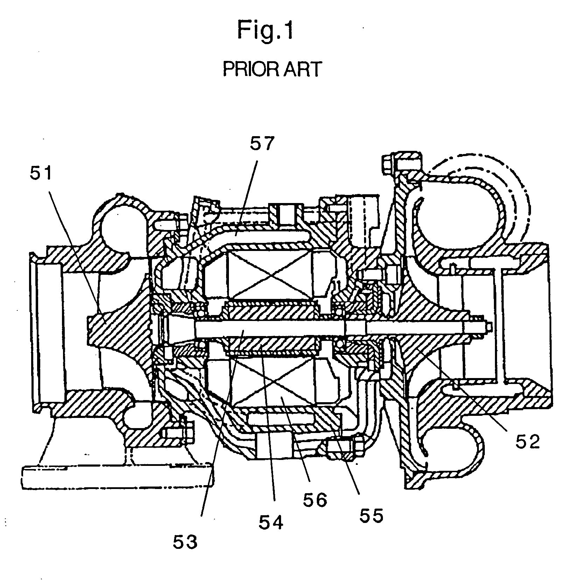

A turbocharger in the patent document 1 is provided with a power generator constituted by a power generating and motor driving rotor 54 attached onto a shaft 53 coupling a turbine 51 and a compressor 52, and a stator 56 attached within a housing 55, and a cooling water jacket 57 formed in an inner portion of a housing surrounding the stator for cooling the stator, as shown in Fig. 1.

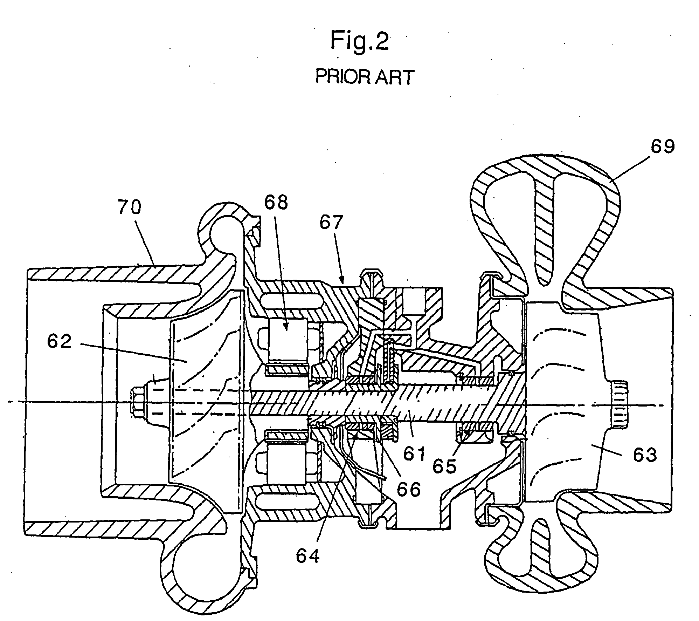

A motor assist turbocharger in the patent document 2 is provided with a compressor wheel 62 and a turbine wheel 63 which are attached to both ends of a rotating shaft 61, a first bearing 64 close to a compressor side of the rotating shaft, a second bearing 65 close to a compressor side of the rotating shaft, a thrust bearing 66 positioned between the first bearing and the second bearing, a housing 67 holding a first bearing, a second bearing and the rotating shaft, an assist electric motor 68 positioned in the compressor side of the rotating shaft, an exhaust gas swirl portion 69 directly introducing an exhaust gas from an internal combustion engine to the turbine wheel, and a compressor casing 70 receiving a compressed air from the compressor wheel, as shown in Fig. 2.

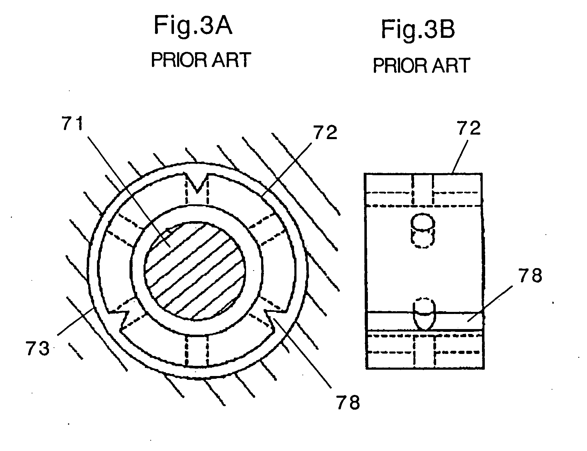

A floating bush bearing in the patent document 3 is constituted by a rotating shaft 71, a cylindrical floating bush 72 brought into slidable contact with the rotating shaft 71, and a bearing 73 brought into slidable contact with the floating bush 72 in an outer peripheral side of the floating bush 72, as shown in Figs. 3A and 3B. The floating bush 72 is provided with a groove 78 extending in an axial direction in an inner peripheral surface or an outer peripheral surface of the floating bush 72, and deforms the floating bush 72 into a multirobe bearing on the basis of a centrifugal force during the rotation.

Patent Document 1

Japanese Unexamined Patent Publication No. 2000-130176 "TURBOCHARGER PROVIDED WITH GENERATOR AND MOTOR"

Patent Document 2

U.S.P. No. 5,587,332 "BEARING SYSTEMS FOR MOTOR-ASSISTED TURBOCHARGERS FOR INTERNAL COMBUSTION ENGINES"

Patent Document 3

Japanese Unexamined Patent Publication No. 2002-213450 "FLOATING BUSH BEARING AND TURBOCHARGER PROVIDED WITH THE SAME"

In the motor-driven supercharger having the electric motor built-in, it is desirable for achieving a downsizing to employ a structure in which the electric motor is arranged in outer sides of two bearings supporting the rotating shaft. However, in this case, since the electric motor is arranged in the outer side of the one bearing, an overhang amount is increased, and a load applied to the bearing is increased.

Accordingly, in the case that the conventional complete round full float bearing is used as the bearing, a damping effect on the basis of an oil film comes short, and there is generated a self-excited vibration called as an oil whip or an oil whirl. As a result, a shaft vibration and a noise are enlarged, and there is a problem that the bearing is burnt out.

The oil whip corresponds to the self-excited vibration generated due to the bearing oil film, and a judder having a large amplitude and generated at about a time when a shaft rotating speed reaches twice a primary critical speed of the rotor. Further, the oil whirl corresponds to a vibration having a small amplitude and generated considerably before the shaft rotating speed reaches twice the primary critical speed of the rotor, and grows up to the oil whip having the large amplitude at about a time when it reaches twice the primary critical speed.

### SUMMARY OF THE INVENTION

The present invention is made for solving the problem mentioned above. In other words, an object of the present invention is to provide a bearing structure of a motor-driven supercharger which can suppress a self-excited vibration of an oil whip or an oil whirl even in the case that the electric motor is arranged in an outer side of the bearing and an overhang amount is increased, thereby reducing a shaft vibration and a noise.

In accordance with the present invention, there is provided a bearing structure of a motor-driven supercharger comprising:
a turbine shaft having a turbine impeller in one end;
a compressor impeller coupled to the other end of the turbine shaft;
a bearing housing having a cylindrical bearing hole through which the turbine shaft passes;
a turbine housing surrounding the turbine impeller and coupled to the bearing housing;
a compressor housing surrounding the compressor impeller and coupled to the bearing housing;
a motor rotor fixed to the turbine shaft and rotating together with the turbine shaft; and
a motor stator surrounding the motor rotor and fixed within the bearing housing,
wherein the bearing structure further comprises:
   a hollow cylindrical turbine side bearing metal and a hollow cylindrical compressor side bearing metal in which an outer peripheral surface is fitted to the bearing hole of the bearing housing with a gap, and an inner peripheral surface rotatably supports the turbine shaft; and
   a bearing locking member holding the turbine side bearing metal and the compressor side bearing metal so as to be movable in a radial direction of the turbine shaft and inhibit a movement in an axial direction and a rotating direction, and
   wherein the inner peripheral surface and/or the outer peripheral surface of the compressor side bearing metal is structured as a non-complete round bearing.

Further, in accordance with the present invention, there is provided a bearing structure of a motor-driven supercharger comprising:
a turbine shaft having a turbine impeller in one end;
a compressor impeller coupled to the other end of the turbine shaft;
a bearing housing having a cylindrical bearing hole through which the turbine shaft passes;
a turbine housing surrounding the turbine impeller and coupled to the bearing housing;
a compressor housing surrounding the compressor impeller and coupled to the bearing housing;
a motor rotor fixed to the turbine shaft and rotating together with the turbine shaft; and
a motor stator surrounding the motor rotor and fixed within the bearing housing,
wherein the bearing structure further comprises:
   a hollow cylindrical turbine side bearing metal and a hollow cylindrical compressor side bearing metal in which an outer peripheral surface is fitted to the bearing hole of the bearing housing with a gap, and an inner peripheral surface rotatably supports the turbine shaft; and
   a bearing locking member holding the turbine side bearing metal and the compressor side bearing metal so as to be movable in a radial direction of the turbine shaft and inhibit a movement in an axial direction and a rotating direction, and
   wherein the inner peripheral surface and/or the outer peripheral surface of the turbine side bearing metal is structured as a non-complete round bearing.

In accordance with a preferable mode of the present invention, the non-complete round bearing is constituted by a multirobe bearing comprising a plurality of circular arc surfaces.

Further, it is preferable that the turbine side bearing metal and the compressor side metal are integrally or separately structured.

In accordance with the structure of the present invention mentioned above, since the outer peripheral surface of the hollow cylindrical bearing metal is fitted to the bearing hole of the bearing housing with the gap, the inner peripheral surface rotatably supports the turbine shaft, and the bearing locking member holds the bearing metal so as to be movable in the radial direction, thereby inhibiting the movement in the axial direction, the bearing metal functions as a so-called "semi-floating metal" floating only in a radial direction without rotating, is positioned between the turbine shaft and the bearing hole, and can suppress the vibration of the turbine shaft on the basis of a spring characteristic and a damping characteristic of the oil film formed between the turbine shaft and the bearing hole while supporting a high-speed rotation of the turbine shaft.

Further, in accordance with the structure of the present invention, since the bearing structure has the turbine side bearing metal and the compressor side bearing metal which are spaced in the axial direction, and the inner peripheral surface and/or the outer peripheral surface of the bearing metal are structured as the non-complete round bearing (the multirobe bearing constituted by a plurality of circular arc surfaces), the gap between the inner peripheral surface and the turbine shaft, and/or the gap between the outer peripheral surface and the bearing hole is not constant but is different in accordance with the orientation in the radial direction. Accordingly, the spring characteristic and the damping characteristic of the oil film formed between them are changed in accordance with the orientation in the radial direction, and it is possible to achieve the rotating shaft system in which the self-excited vibration of the oil whip or the oil whirl is hard to be generated. As a result, it is possible to reduce a dynamic load generated in the bearing, and it is possible to prevent a seizure of the bearing which is frequently generated in the supercharger having the electric motor built-in.

The other objects and advantages of the present invention will become apparent from the following description with reference to the accompanying drawings.

### BRIEF DESCRIPTION OF THE DRAWINGS

Fig. 1 is a schematic view of a turbocharger in patent document 1;
Fig. 2 is a schematic view of a motor assist turbocharger in patent document 2;
Figs. 3A and 3B are schematic views of a floating bush bearing in patent document 3;
Fig. 4 is a view of an entire structure of a motor-driven supercharger provided with a bearing structure in accordance with the present invention;
Fig. 5 is a view as seen from a line A-A in Fig. 4; and
Fig. 6 is a partly enlarged view of Fig. 5.

### DESCRIPTION OF PREFERRED EMBODIMENT

A description will be given below of a preferable embodiment in accordance with the present invention with reference to the accompanying drawings. In this case, the same reference numerals are attached to the common portions in each of the drawings, and an overlapping description will be omitted.

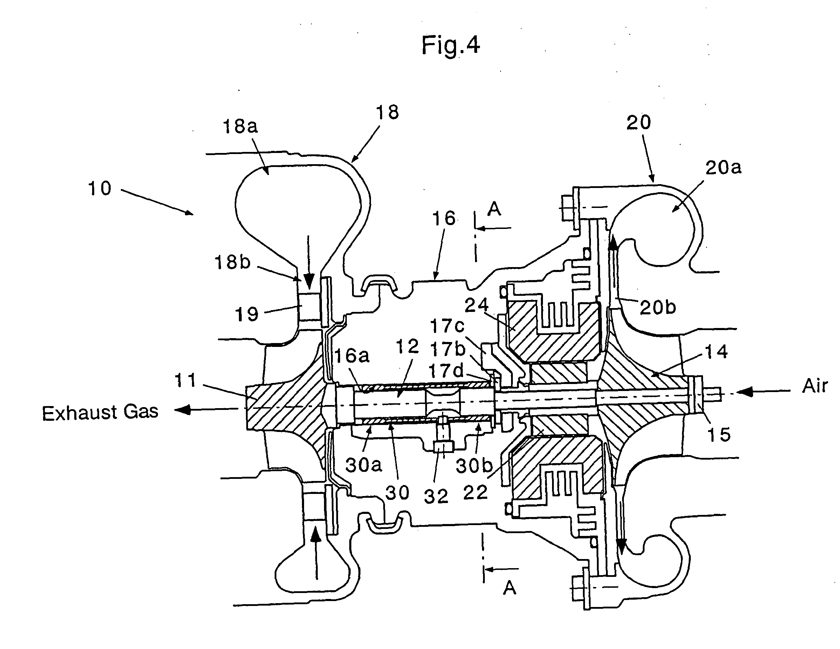

Fig. 4 is a view of an entire structure of a motor-driven supercharger provided with a bearing structure in accordance with the present invention. In this drawing, a motor-driven supercharger 10 is provided with a turbine shaft 12, a compressor impeller 14, a bearing housing 16, a turbine housing 18 and a compressor housing 20.

The turbine shaft 12 is constituted by an elongated cylindrical solid shaft and has a turbine impeller 11 in one end (a left end in the drawing). In this embodiment, the turbine impeller 11 is integrally formed in the turbine shaft 12. However, the present invention is not limited to this, but may be structured such that the turbine impeller 11 is independently attached.

The compressor impeller 14 is coupled to the other end (a right end in the drawing) of the turbine shaft 12 by a shaft end nut 15 so as to integrally rotate.

The bearing housing 16 has a cylindrical bearing hole 16a through which the turbine shaft 12 passes. The cylindrical bearing hole 16a rotatably supports the turbine shaft 12 via a hollow cylindrical bearing metal 30.

Further, the turbine shaft 12 is supported by a thrust collar 17b and thrust bearings 17c and 17d so as to be immobile in an axial direction. Further, the bearing housing 16 has a lubricating fluid flow path (not shown) for lubricating the bearing metal 30, the thrust collar 17b and the thrust bearings 17c and 17d.

The turbine housing 18 rotatably surrounds the turbine impeller 11, and is coupled to the bearing housing 16. The turbine housing 18 has a scroll chamber 18a in which an exhaust gas is introduced to an inner portion from an external portion, and an annular flow path 18b guiding the exhaust gas to the turbine impeller 11 from the scroll chamber 18a and having a fixed interval.

Further, in the annular flow path 18b, a plurality of nozzle vanes 19 are arranged at a fixed interval in a peripheral direction. The nozzle vane 19 is constituted by a variable nozzle vane, and it is preferable that the nozzle vane 19 can change a flow path area formed therebetween. However, the present invention is not limited to this, but may be constituted by a fixed nozzle vane.

The compressor housing 20 rotatably surrounds the compressor impeller 14, and is coupled to the bearing housing 16. The compressor housing 20 has a scroll chamber 20a in which the compressed air is introduced to an inner portion, and an annular flow path 20b guiding the compressed air to the scroll chamber 20a from the compressor impeller 14 and having a constant interval.

On the basis of the structure mentioned above, it is possible to rotationally drive the turbine impeller 11 by the exhaust gas of the engine, it is possible to transmit the rotating force to the compressor impeller 14 via the turbine shaft 12, and it is possible to compress the air by the compressor impeller 14 so as to supercharge to the engine.

The motor-driven supercharger 10 in Fig. 4 is further provided with a motor rotor 22 and a motor stator 24.

The motor rotor 22 is fixed to the turbine shaft 12 so as to rotate together with the turbine shaft. The motor rotor 22 corresponds to a rotor of the electric motor. Further, the motor stator 24 surrounds the motor rotor 22. The motor stator 24 is fixed within the bearing housing 16. The motor stator 24 corresponds to a stator of the electric motor. A brushless ac motor is constituted by the motor rotor 22 and the motor stator 24.

It is preferable that the ac motor can correspond to a high-speed rotation (for example, at least 100 to 200 thousand rpm) of the turbine shaft 12, and can execute a rotational drive at a time of accelerating and a regenerative operation at a time of decelerating. Further, it is preferable that a drive voltage of the ac motor is equal to or higher than (for example, 24 to 36 V) a dc voltage (for example, 12 V) of a battery mounted on the vehicle. It is possible to make the ac motor compact by increasing the drive voltage.

In Fig. 4, the bearing structure in accordance with the present invention is constituted by the bearing metal 30 and a bearing locking member 32.

The bearing metal 30 is constituted by a hollow cylindrical member, and is structured such that an outer peripheral surface is fitted to the bearing hole 16a of the bearing housing 16 with a small gap, and an inner peripheral surface rotatably supports the turbine shaft 12.

The bearing metal 30 has a turbine side bearing metal 30a and a compressor side bearing metal 30b which are spaced in an axial direction.

In this case, the turbine side bearing metal 30a and the compressor side bearing metal 30b are integrally formed in this embodiment. However, the turbine side bearing metal 30a and the compressor side bearing metal 30b may be structured as separated bodies. In this case, the bearing locking member 32 may be provided in each of the turbine side bearing metal 30a and the compressor side bearing metal 30b.

Further, the bearing locking member 32 is fixed to a part of the bearing housing 16 by a screw or the like, and is structured such that a part thereof is fitted to the bearing metal 30 in a radial direction, the bearing locking member holds the bearing metal 30 so as to be movable in a radial direction of the turbine shaft 12 and inhibits a movement in an axial direction and a peripheral direction.

In accordance with this structure, since the bearing metal floats only in the radial direction without rotating, a so-called semi-floating metal is formed. The bearing metal is positioned between the turbine shaft 12 and the bearing hole 16a, and it is possible to suppress the vibration of the turbine shaft on the basis of a spring characteristic and a damping characteristic of an oil film formed between them while supporting a high-speed rotation of the turbine shaft.

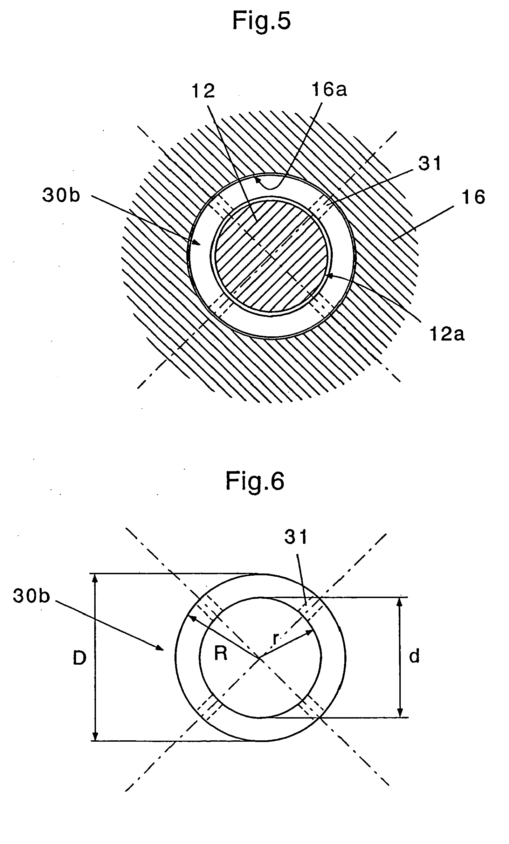

Fig. 5 is a view as seen from a line A-A in Fig. 4. In this drawing, the bearing hole 16a of the bearing housing 16 and the outer peripheral surface 12a of the turbine shaft 12 are formed as a complete round shape. The inner peripheral surface of the compressor side bearing metal 30b is formed as a non-complete round bearing, that is, a multirobe bearing mentioned below.

In this case, both of the inner peripheral surface and the outer peripheral surface of the compressor side bearing metal 30b may be structured as the non-complete round bearing, or only one of the inner peripheral surface and the outer peripheral surface may be formed as the non-complete round bearing.

Further, the inner peripheral surface and/or the outer peripheral surface of the turbine side bearing metal 30a may be structured as the non-complete round bearing in place of the compressor side bearing metal 30b, or both may be structured as the non-complete round bearing.

Fig. 6 is a partly enlarged view of Fig. 5, and shows only the compressor side bearing metal 30b. On the assumption that a diameter of a complete round brought into contact with the inner peripheral surface of the compressor side bearing metal 30b is set to d, the inner peripheral surface is structured by a plurality of (four in this embodiment) circular arc surfaces having a radius r which is slightly larger than d/2. It is preferable to set the radium r to be 1 % to 2 % larger than d/2.

Further, in this embodiment, there are provided with a plurality of lubricating fluid passages 31 passing through the inner peripheral surface and the outer peripheral surface of the compressor side bearing metal 30b in the radial direction. It is preferable that the lubricating fluid passage is set at a position where a gap between the bearing hole 16a and the turbine shaft 12 is large.

Further, in the case that the outer peripheral surface is structured as the non-complete round bearing, on the assumption that a diameter of a complete round brought into contact with the outer peripheral surface of the compressor side bearing metal 30b is set to D, the outer peripheral surface is structured by a plurality of (four in this embodiment) circular arc surfaces having a radius R which is slightly larger than D/2. It is preferable to set the radium R to be 1 % to 2 % larger than D/2.

In this case, the number of the circular arc surfaces is not limited to four, but may be set to two, three, or five or more. Further, it may be constituted by a crisscross type bearing.

In accordance with the structure mentioned above, since the gap between the inner peripheral surface of the bearing metal 30b (or 30b) and the turbine shaft 12, and/or the gap between the outer peripheral surface of the bearing metal 30b (or 30b) and the bearing hole 16a is not constant, but is different in accordance with the orientation in the radial direction, the spring characteristic and the damping characteristic of the oil film formed therebetween are changed in accordance with the orientation in the radial direction, so that it is possible to achieve a rotating shaft system in which the self-excited vibration such as the oil whip or the oil whirl is hard to be generated.

As a result, it is possible to reduce the dynamic load generated in the bearing, and it is possible to prevent the seizure of the bearing which is frequently generated in the supercharger having the electric motor built-in. In other words, it is possible to prevent the self-excited vibration from being generated so as to achieve a stable bearing, by employing the multirobe bearing in which the shape of the bearing surface is formed by a plurality of circular arcs eccentrically formed from the axial center.

In this case, it goes without saying that the present invention is not limited to the embodiment mentioned above, but can be variously modified within the range of the scope of the present invention.

## Claims

1. A bearing structure of a motor-driven supercharger comprising:
a turbine shaft having a turbine impeller in one end;
a compressor impeller coupled to the other end of the turbine shaft;
a bearing housing having a cylindrical bearing hole through which the turbine shaft passes;
a turbine housing surrounding the turbine impeller and coupled to the bearing housing;
a compressor housing surrounding the compressor impeller and coupled to the bearing housing;
a motor rotor fixed to the turbine shaft and rotating together with the turbine shaft; and
a motor stator surrounding the motor rotor and fixed within the bearing housing,
wherein the bearing structure further comprises:
a hollow cylindrical turbine side bearing metal and a hollow cylindrical compressor side bearing metal in which an outer peripheral surface is fitted to the bearing hole of the bearing housing with a gap, and an inner peripheral surface rotatably supports the turbine shaft; and
a bearing locking member holding the turbine side bearing metal and the compressor side bearing metal so as to be movable in a radial direction of the turbine shaft and inhibit a movement in an axial direction and a rotating direction, and
wherein the inner peripheral surface and/or the outer peripheral surface of the compressor side bearing metal is structured as a non-complete round bearing.

2. A bearing structure of a motor-driven supercharger comprising:
a turbine shaft having a turbine impeller in one end;
a compressor impeller coupled to the other end of the turbine shaft;
a bearing housing having a cylindrical bearing hole through which the turbine shaft passes;
a turbine housing surrounding the turbine impeller and coupled to the bearing housing;
a compressor housing surrounding the compressor impeller and coupled to the bearing housing;
a motor rotor fixed to the turbine shaft and rotating together with the turbine shaft; and
a motor stator surrounding the motor rotor and fixed within the bearing housing,
wherein the bearing structure further comprises:
a hollow cylindrical turbine side bearing metal and a hollow cylindrical compressor side bearing metal in which an outer peripheral surface is fitted to the bearing hole of the bearing housing with a gap, and an inner peripheral surface rotatably supports the turbine shaft; and
a bearing locking member holding the turbine side bearing metal and the compressor side bearing metal so as to be movable in a radial direction of the turbine shaft and inhibit a movement in an axial direction and a rotating direction, and
wherein the inner peripheral surface and/or the outer peripheral surface of the turbine side bearing metal is structured as a non-complete round bearing.

3. The bearing structure of a motor-driven supercharger as claimed in claim 1 or 2, wherein the non-complete round bearing is constituted by a multirobe bearing comprising a plurality of circular arc surfaces.

4. The bearing structure of a motor-driven supercharger as claimed in claim 1, wherein the turbine side bearing metal and the compressor side metal are integrally or separately structured.
